# EUROPEAN PATENT APPLICATION

(11) **EP 1 671 724 A2**
(43) Date of publication of application: **21.06.2006**
(21) Application number: 05380268.2
(22) Date of filing: 16.12.2005
(51) Int. Cl.: B23B 3/24, B23B 29/02

(54) **Portable device for turning operations on machinery**

(30) Priority: 17.12.2004 ES 200402839 U
(71) Applicant: Sanz Paniagua, Fermin, 50420 Cadrete, Zaragoza (ES)
(72) Inventor: Sanz Paniagua, Fermin, 50420 Cadrete, Zaragoza (ES)
(74) Representative: Carpintero Lopez, Francisco

(57) **Abstract**

Portable device for turning operations on machinery, which, being easily transportable, enables machining jobs to be performed *in situ* and which basically consists of a mandrel (4) taking the form of a cylindrical bar for coaxial coupling to the holes to be machined, said mandrel being provided with locators (5) for attachment to the frame which permit its rotation and axial displacement, radial holes (7) for its attachment and means for endowing it with rotary movement consisting of a gear motor (8) fitted with an output shaft (9).

## Description

### OBJECT OF THE INVENTION

The present invention refers to a device that has been especially designed to perform turning jobs or operations on different types of machines, such as, for instance, farm machinery, public works machinery, etc.

The object of the invention is to achieve an easily transportable device that will enable machining jobs to be carried out "in situ", i.e. at the location or work place of the machine in question, without the need for this to be transferred to a workshop.

### BACKGROUND OF THE INVENTION

In a preferred area of application of the invention, such as for instance in the field of public works machinery, the normal working of these machines entails wear taking place on jointed parts, giving rise to gradually increasing play, which has a negative impact on the operating capability of the machine. To overcome this problem, the standard practice is to carry out machining jobs on the cylindrical housings subject to wear in order to enlarge and rectify these holes and permit larger-sized bushings to be fitted in them in order to eliminate the aforementioned play.

At the present time and in order to perform these maintenance jobs, it is necessary for the machine to be transferred to a machine workshop, which not only involves substantial costs of transferring the machine, but also a considerable loss of time and a lengthy lay-up period for the machine from the performance point of view, all of which has a very negative effect on the economic aspect.

### DESCRIPTION OF THE INVENTION

The device proposed by the invention provides a fully satisfactory answer to the problems described above, as its portable nature makes it easily transportable to the work place where the machine in question is located, so that the latter does not have to be transferred and its lay-up period is reduced to a minimum, the time required to perform the repair in question to be exact.

For this purpose and more specifically, the device is structured on the basis of a mandrel or cylindrical bar, of suitable length and diameter so as to be used in any foreseen practical circumstances. This mandrel is assisted by a pair of locators which enable the mandrel be positioned perfectly coaxially to the hole which is to be machined, the said locators being attached either to the actual frame of the machine under repair or else to any other suitable ancillary support.

The aforementioned mandrel is provided with a number of radial holes of different diameters, which enable the tool to be attached anywhere along this mandrel, according to the specific requirements of each case.

Naturally, the tool has to undergo a combined rotational and axial displacement movement, which is supplied to it by means of the actual mandrel into which it is has been integrated.

The rotary movement of the mandrel is achieved with the assistance of a gear motor provided with a hollow output shaft, suitably sized for the mandrel, so that it may pass through it. The gear motor shaft and the mandrel are connected by means of a key which, by transmitting the rotary movement to the mandrel, permits the axial displacement.

For the forward movement of the mandrel or, in other words, for the axial movement of the tool, provision is made for the existence of a second gear motor, to the output shaft of which a spindle is attached, via a bevel gear drive, that moves around in a nut associated with a stop established in the middle area of the mandrel, so that the movement of this second gear motor entails a displacement of the stop along the spindle and the corresponding axial drive of the mandrel. In order to enhance this mandrel axial drive manoeuvre, provision is made for a second spindle, parallel to the previous one and parallel to the mandrel as well, arranged in contraposition to the former, which moves in a second nut established in the stop and which receives the movement of the first spindle by means of a pair of coplanar gears and a chain.

As a complement to the structure described and in order to make the device fully self-contained, provision is made for a current generator to play a part in it so that said device may work in areas away from the general mains power supply. This current generator supplies the aforementioned motors by means of a control box in order to govern their movement in a way similar to how a classic or conventional lathe is controlled.

### DESCRIPTION OF THE DRAWINGS

To supplement the description being given and in order to help provide a clearer understanding of the characteristics of the invention, in accordance with a preferred example of practical embodiment of the invention, as an integral part of the aforementioned description a set of drawings accompanies has been included, wherein there has been represented, on a purely illustrative and non-restrictive basis, the following:
Figure 1.- According to a perspective view, it shows a portable device for turning operations executed in accordance with the object of the present invention, duly mounted on the fork of a public works machine, only partly shown.

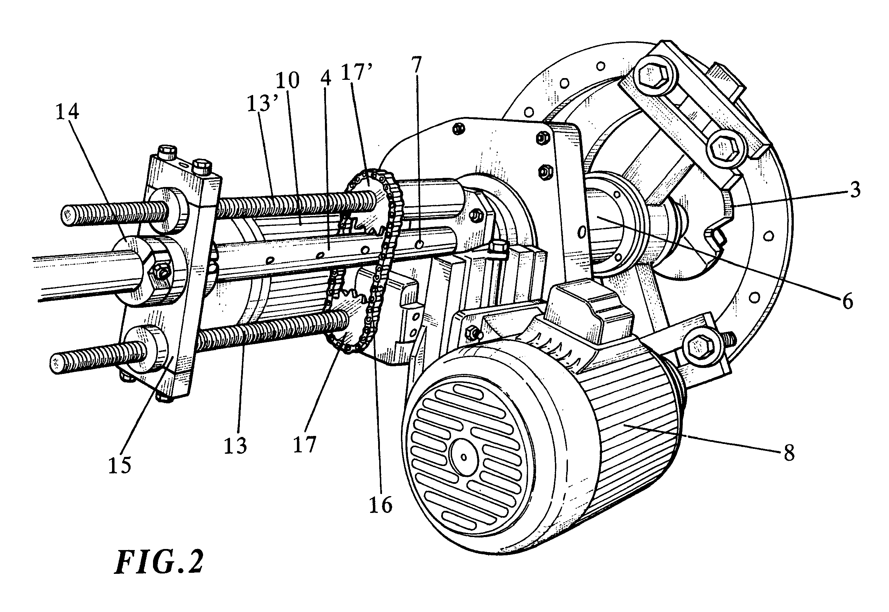

Figure 2.- It shows an enlarged close view, also in perspective, of the device of the previous figure, at the level of the mandrel drive gear motor.

### PREFERRED EMBODIMENT OF THE INVENTION

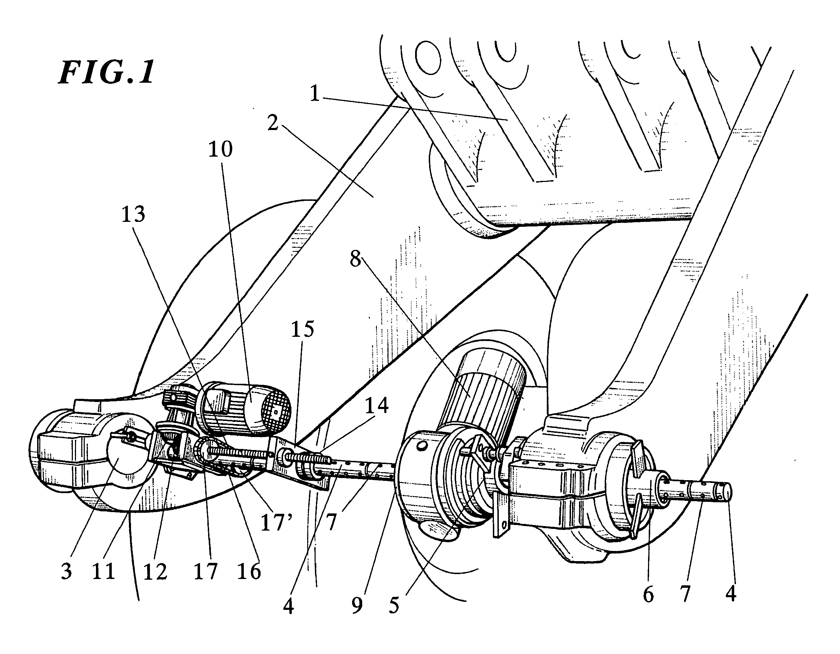

The abovementioned figures, specifically figure 1, show a public works machine (1), equipped with a fork (2), provided at each of the two ends of its free arms with coaxial holes (3) for the jointed attachment of another component, such as for example a shovel, not represented in the drawings, holes (3) which have undergone wear as a result of the normal use of the machine that requires machining to eliminate the play that has arisen due to the aforementioned wear.

Now, the portable device proposed by the invention consists of a mandrel (4) taking the form of a cylindrical bar of considerable length, for coupling coaxially in the holes (3) of the piece to be machined, with the assistance of a pair of end locators (5), which, after the correct alignment or coaxial installation of the mandrel (1) in relation to the holes (3), is fixed to the arms of the fork (2), for instance by means of spot welds, which will be removed at the end of the turning operations.

These locators (5) are provided with inner bushings (6) which permit both the free rotation of the mandrel (4) and its axial displacement.

The mandrel (4) is provided with a number of radial holes (7), suitably and profusely spread all along and around it, which permit the firm attachment of the cutting tool - not shown in the drawings - to said mandrel, at any suitable point thereof, for working on the inside of the holes (3).

The rotary movement of the aforementioned tool is produced in conjunction with a gear motor (8), fitted with a tubular output shaft (9), traversed snugly by the mandrel (4) and connected to the latter by means of a key, which represents the drive element of the mandrel (4), yet permitting its free longitudinal displacement.

For said longitudinal displacement of the mandrel (4), i.e. for the forward and backward movement of the tool, a second gear motor (10) is provided. Depending on the spacing required in relation to the gear motor (8), this may be attached directly to the latter and by means of it to the frame of the machine being repaired or to the device support, or else it may be fixed independently to any of these elements. In any case, the output shaft of the gear motor (10) is fitted with a bevel gear (11) which engages with a second bevel gear (12), integral with which there is a spindle (13) that moves in a nut (14) mounted on a stop (15), so that, in face of the static situation of the gear motor (10) and the actuation of the latter, the rotation of the spindle (13) gives rise to the displacement along it of the stop (15) and the consequent axial dragging of the mandrel (4), integral with the aforementioned stop (15).

Since the aforementioned spindle (13) takes up a position parallel to the mandrel (4) and substantially separated from the latter, in order to achieve the proper stress balance in the mandrel drive, provision is made for the stop (15) to extend towards the opposite side of the mandrel (4) and to incorporate a second nut on this side traversed by a second spindle (13') and for both spindles to be connected to each other by means of a chain (16), which engages with respective coplanar sprockets (17-17').

The motors (8) and (10) may be driven from the mains supply, but preferably, as mentioned above and in order to make the device fully self-contained, they are supplied from a stand-alone generator, with its respective explosion or internal combustion engine, and by way of a control box in order to govern its movements.

## Claims

1. Portable device for turning operations on machinery which, having the function of enabling repair or maintenance operations to be performed on such machinery at the actual work place, without the need for it to be transferred to the workshop, and being especially suitable for rectifying holes in order to eliminate play, is **characterised in that** it comprises a mandrel (4), taking the form of a cylindrical bar of appropriate length and diameter, for coaxially coupling to the hole or holes to be machined on the machine under repair, for which purpose it is provided with a pair of locators (5) for attachment to the frame of the machine or to any suitable support which permit the free rotation and axial displacement of the mandrel, which is fitted with means for the attachment of the cutting tool at any point of same, as well as with means for its rotary movement and for its axial displacement, in order that the tool attached to it may in turn move in a rotary and axial direction inside the hole to be machined.

2. Portable device for turning operations on machinery, according to claim 1, **characterised in that** the mandrel means for the attachment of the tool consist of a number of radial holes (7) of different diameters, spread profusely along the mandrel (4), for the screw attachment of said tool on any one of them.

3. Portable device for turning operations on machinery, according to claim 1, **characterised in that** the means that endow the mandrel with rotary movement consist of a gear motor (8), fitted with a tubular output shaft (9), traversed snugly by the mandrel (4) and connected to the latter by means of a key, so that said gear motor (8) supplies the mandrel (4) with a rotary movement, without impeding its free axial displacement.

4. Portable device for turning operations on machinery, according to claim 1, **characterised in that** the axial displacement means of the mandrel consist of a gear motor (10), the output shaft of which is integral with a bevel gear (11) which transmits the movement by way of another bevel gear (12) to a spindle (13) parallel to the mandrel (4), on which there plays a nut (14), mounted on a stop (15) attached in turn to the mandrel (4) in the middle area of the same, so that the rotary movement of the aforementioned gear motor (10) brings about a displacement of the stop (15) along the spindle (13).

5. Portable device for turning operations on machinery, according to claim 4, **characterised in that** in contraposition to the aforementioned spindle (13) there is a second symmetrical spindle (13') on the mandrel (4), in which a second nut moves, both spindles (13-13') being connected to each other by means of a chain (16) which transmits synchronised movement from the former to the latter, with the assistance of respective sprockets (17-17') duly attached to the aforementioned spindles in a coplanar arrangement.

6. Portable device for turning operations on machinery, according to claims 3 and 4, **characterised in that** the gear motor (8) which supplies the rotary movement to the mandrel (4) is attached to the frame of the machine under repair or to a suitable support, while the second gear motor (10), in the displacement of the mandrel (4), is fixed either to the former gear motor (8) or independently to the aforementioned frame of the machine or to another appropriate support.

7. Portable device for turning operations on machinery, according to the previous claims, **characterised in that** the aforementioned gear motors (8) and (10) are driven from a current generator, which confers full independence on the device, by means of a control box for governing the aforementioned gear motors (8) and (10).
